# EUROPÄISCHE PATENTSCHRIFT

(11) **EP 2 708 302 B1**
(45) Veröffentlichungstag und Bekanntmachung des Hinweises auf die Patenterteilung: **10.06.2015**
(21) Anmeldenummer: 12006437.3
(22) Anmeldetag: 13.09.2012
(51) Int. Cl.: B23D 45/06, B23D 47/08, B23D 59/02, B23Q 11/10

(54) **Sägeeinrichtung**
Sawing device
Dispositif de coupe

(43) Veröffentlichungstag der Anmeldung: 19.03.2014
(73) Patentinhaber: Schelling Anlagenbau GmbH, 6858 Schwarzach (AT)
(72) Erfinder: Zoier, Stefan, 6850 Dornbirn (AT); Pöschl, Wolfgang, 6844 Altach (AT)
(74) Vertreter: Fechner, Thomas

(56) Entgegenhaltungen:
- WO-A1-01/34359
- CH-A5- 665 163
- DE-A1- 19 830 605
- FR-A- 1 228 244
- GB-A- 652 871
- JP-A- 6 182 701
- US-A- 4 581 967
- US-A1- 2010 130 106
- US-B1- 6 772 042

## Beschreibung

Die vorliegende Erfindung betrifft eine Sägeeinrichtung gemäß dem Oberbegriff des Patentanspruchs 1, insbesondere Unterflurkreissäge für eine Plattenaufteilanlage, mit zumindest einer, um eine Kreissägeblattdrehachse drehbar an einem Kreissägeblattspindelträger gelagerten Kreissägeblattaufnahmespindel, an der ein Kreissägeblatt befestigbar oder befestigt ist, und einem Kreissägeblattantriebsmotor zum Drehen der Kreissägeblattaufnahmespindel um die Kreissägeblattdrehachse, wobei der Kreissägeblattspindelträger zusammen mit der Kreissägeblattaufnahmespindel mit deren Kreissägeblattdrehachse auf einer kreisbogenabschnittsförmigen Bahn um eine von der Kreissägeblattdrehachse distanziert angeordnete Schwenkachse der Sägeeinrichtung schwenkbar gelagert ist.

Eine solche Sägeeinrichtung geht beispielsweise aus der US 4 581 967 A hervor.

Sägeeinrichtungen dieser Art werden insbesondere als Unterflurkreissägen für Plattenaufteilanlagen eingesetzt. Es handelt sich dabei meist um größere Anlagen, auf denen Plattenmaterial, oft in gestapelter Form, zugeschnitten wird. Es kann sich um Platten aus Holz, Kunststoff, Metall sowie diversen Verbundwerkstoffen handeln. Mittels der Schwenkbewegung um die Schwenkachse kann das Kreissägeblatt der Sägeeinrichtung in zumindest eine Betriebsstellung geschwenkt werden, in der es so positioniert ist, dass das Werkstück zersägt werden kann. Durch Verschwenken um die Schwenkachse kann das Kreissägeblatt dann aber auch so weit bewegt werden, dass es z.B. zum Transport oder auch als Sicherheitsmaßnahme nicht mehr in den Bereich hineinragt, in dem der Schnitt durchgeführt wird. Häufig werden gattungsgemäße Sägeeinrichtungen als sogenannte Unterflurkreissägen eingesetzt. In der Betriebsstellung reicht dann das Kreissägeblatt durch einen Schnittspalt in einem Auflagetisch so weit hindurch, dass es das Werkstück oder die Werkstücke zersägen kann. In der zurückgezogenen Stellung ist das Kreissägeblatt dann vollständig unter den Auflagetisch abgesenkt.

Eine Sägeeinrichtung ist z.B. in der CH 665 163 A5 gezeigt.

Der Markt verlangt heutzutage Sägeeinrichtungen, die einerseits eine hohe Schnittleistung, also eine Vielzahl von Sägevorgängen pro Zeit, und andererseits aber auch eine ausgezeichnete Schnittqualität gewährleisten. Durch die schwenkbare Lagerung des Kreissägeblattspindelträgers wird bei gattungsgemäßen Sägeeinrichtungen zwar eine sehr kompakte Bauweise erzielt. Die Praxis zeigt aber, dass vor allem in Sachen Schnittqualität bei gattungsgemäßen Sägeeinrichtungen noch Verbesserungsbedarf besteht.

Aufgabe der Erfindung ist es daher, bei einer Sägeeinrichtung der oben genannten Art die Schnittqualität zu verbessern.

Erfindungsgemäß wird dies durch eine Sägeeinrichtung gemäß dem Patentanspruch 1 erreicht. Die Sägeeinrichtung weist zumindest eine kreisbogenabschnittsförmig ausgebildete Führungseinrichtung auf, von der der Kreissägeblattspindelträger beim Verschwenken um die Schwenkachse führbar oder geführt ist.

Durch die kreisbogenabschnittsförmig ausgebildete Führungseinrichtung, an der der Kreissägeblattspindelträger im Betrieb der Sägeeinrichtung beim Verschwenken um die Schwenkachse geführt ist, wird eine sehr vibrationsarme und präzise Lagerung der Kreissägeblattaufnahmespindel, an der das Kreissägeblatt in Betrieb befestigt ist, erreicht, was auch bei hohen Schnittleistungen eine sehr stabile und exakte Führung des Kreissägeblattes bewirkt und damit zu einer sehr hohen Schnittqualität führt.

In diesem Zusammenhang ist darauf hinzuweisen, dass im Sinne der Erfindung zumindest eine solche kreisbogenabschnittsförmig ausgebildete Führungseinrichtung vorhanden sein muss. Eine Sägeeinrichtung kann aber auch zwei oder mehr solcher kreisbogenabschnittsförmig ausgebildeten Führungseinrichtungen aufweisen.

Grundsätzlich kann die Erfindung bei allen Sägeeinrichtungen der eingangs genannten Art, bei denen Kreissägeblattspindelträger und Kreissägeblattaufnahmespindeln entsprechend um die Schwenkachse verschwenkbar sind, eingesetzt werden. Besonders günstig sind erfindungsgemäße Sägeeinrichtungen aber für den Einsatz bei teilautomatisiert oder vollautomatisiert arbeitenden Plattenaufteilanlagen. Hier können sie insbesondere als Unterflurkreissägen eingesetzt werden. In dieser Einsatzform existiert zumindest eine Betriebsstellung, bei der das Kreissägeblatt über einen Auflagetisch für das zu zersägende Werkstück angehoben ist und durch Verschwenken um die Schwenkachse in eine zurückgezogene Stellung, bei dem es nicht mehr über den Auflagetisch übersteht, gebracht werden kann.

Der Vollständigkeit halber wird darauf hingewiesen, dass die Kreissägeblattaufnahmespindel der Teil der Sägeeinrichtung ist, welcher einerseits mittels des Kreissägeblattantriebsmotors um die Kreissägeblattdrehachse gedreht wird und an welchem andererseits das Kreissägeblatt befestigt wird. Meist handelt es sich dabei um eine lösbare Befestigung des Kreissägeblattes an der Kreissägeblattaufnahmespindel. Dies ermöglicht es, das Kreissägeblatt nach entsprechendem Verschleiß gegen ein neues auszutauschen oder für einen Schärfvorgang abzunehmen. Natürlich können an den Kreissägeblattaufnahmespindeln soweit dies gewünscht ist, auch verschiedene Kreissägeblätter entsprechend angeordnet werden. Dies kann z.B. dann interessant sein, wenn mit der Sägeeinrichtung verschiedene Materialien zersägt werden sollen. Der Kreissägeblattspindelträger ist das Bauteil der Sägeeinrichtung, in dem einerseits die Kreissägeblattaufnahmespindel drehbar gelagert ist und welcher andererseits zusammen mit der Kreissägeblattaufnahmespindel um die Schwenkachse der Sägeeinrichtung geschwenkt werden kann.

Im Sinne einer möglichst kompakten und einfachen Konstruktion ist es bevorzugt vorgesehen, dass der Kreismittelpunkt der kreisbogenabschnittsförmig ausgebildeten Führungseinrichtung auf der Schwenkachse liegt. In diesem Sinne können bevorzugte Ausgestaltungsformen auch vorsehen, dass eine vom Kreissägeblattantriebsmotor angetriebene Antriebswelle des Kreissägeblattantriebsmotors um eine koaxial zur Schwenkachse angeordnete Antriebswellendrehachse drehbar ist. Zur Übertragung der Drehbewegung der Antriebswelle um die Antriebswellendrehachse auf die Kreissägeblattaufnahmespindel sehen bevorzugte Ausgestaltungsformen der Erfindung vor, dass die Antriebswelle des Kreissägeblattantriebsmotors und die Kreissägeblattaufnahmespindel mittels zumindest eines Antriebsriemens oder zumindest einer Antriebskette miteinander verbunden sind. Bei bevorzugten Ausgestaltungsformen handelt es sich im Sinne eines möglichst einfachen und kompakten Aufbaus dabei um genau einen Antriebsriemen oder genau eine Antriebskette. Bevorzugte Ausgestaltungsformen sehen dabei eine Spanneinrichtung zum Spannen des jeweiligen Antriebsriemens bzw. der jeweiligen Antriebskette vor. In diesem Sinne kann z.B. vorgesehen sein, dass der Abstand zwischen der Schwenkachse und der Kreissägeblattdrehachse mittels einer Abstandsverstelleinrichtung verstellbar ist. Als alternative Spanneinrichtungen können aber auch z.B. federbelastete Spannrollen oder in sich elastische Antriebsriemen oder Antriebsketten verwendet werden, um dauerhaft den gewünschten Spannungszustand im Antriebsriemen oder in der Antriebskette zu gewährleisten. Zum Drehen der Kreissägeblattaufnahmespindel mittels der Antriebswelle können aber auch andere Übertragungsformen für die Drehbewegung gewählt werden. So können grundsätzlich alle beim Stand der Technik bekannten und geeigneten Getriebe zur Verbindung der Antriebswelle des Kreissägeblattantriebsmotors mit der Kreissägeblattaufnahmespindel eingesetzt werden. Es kann sich z.B. um Zahnradgetriebe, gegebenenfalls unter Verwendung von Getriebestangen, handeln.

Im Sinne einer möglichst guten Vibrationsunterdrückung und sicheren Lagerung der Kreissägeblattaufnahmespindel und damit des Kreissägeblatts ist es günstig, wenn die Kreissägeblattdrehachse näher an der kreisbogenabschnittsförmig ausgebildeten Führungseinrichtung angeordnet ist als an der Schwenkachse. Dies gilt bevorzugt in allen während des Betriebs der Sägeeinrichtung möglichen Stellungen. Bei der jeweiligen, kreisbogenabschnittsförmig ausgebildeten Führungseinrichtung handelt es sich um eine Führungsschiene oder weist die Führungseinrichtung eine Führungschiene auf. Zusätzlich oder alternativ kann diese kreisbogenabschnittsförmig ausgebildete Führungseinrichtung aber auch eine Führungsnut sein oder zumindest aufweisen. Natürlich sind in diesem Sinne auch Kombinationen aus Führungsschiene, Führungsnut und Führungskulisse denkbar. Die kreisbogenabschnittsförmig ausgebildete Führungseinrichtung kann darüber hinaus aber auch noch weitere Bauteile aufweisen. Es kann in diesem Zusammenhang z.B. auch vorgesehen sein, dass am Kreissägeblattspindelträger Führungseingriffselemente vorgesehen sind, welche in die kreisbogenabschnittsförmig ausgebildete Führungseinrichtung eingreifen bzw. mit dieser zusammenwirken. In diesem Fall kann die kreisbogenabschnittsförmig ausgebildete Führungseinrichtung z.B. an dem weiter unten noch näher erläuterten Schwenkachsenträger angeordnet sein. Natürlich ist auch die Anordnung anders herum möglich, bei der der Schwenkachsenträger die Führungseingriffselemente aufweist und die kreisbogenabschnittsförmig ausgebildeten Führungseinrichtungen am Kreissägeblattspindelträger angeordnet ist bzw. sind.

Um die Schwenkbewegung des Kreissägeblattspindelträgers um die Schwenkachse nicht von Hand durchführen zu müssen, sehen bevorzugte Ausgestaltungsformen der Erfindung vor, dass die Sägeeinrichtung zumindest einen motorischen Schwenkantrieb zum Verschwenken des Kreissägeblattspindelträgers um die Schwenkachse aufweist. Hierbei sind grundsätzlich alle beim Stand der Technik bekannten, geeigneten Schwenkantriebe denkbar. Bevorzugte Ausgestaltungsformen der Erfindung sehen vor, dass es sich beim motorischen Schwenkantrieb um zumindest einen verschwenkbar gelagerten Linearantrieb handelt. Geeignete Linearantriebe können z.B. elektrische Linearantriebe, hydraulische oder pneumatische Kolben-Zylinder-Einheiten aber auch Spindelantriebe oder dergleichen sein. Gegebenenfalls zusätzlich zum motorischen Schwenkantrieb kann eine Vorspanneinrichtung vorgesehen sein, welche den Kreissägeblattspindelträger in zumindest einer Schwenkrichtung um die Schwenkachse vorspannt. Diese Vorspanneinrichtungen können z.B. in Form von Federn oder Federpaketen ausgebildet sein. Sie erlauben es z.B. die auf den Kreissägeblattspindelträger in eine der Schwenkrichtungen um die Schwenkachse einwirkende Schwerkraft auszugleichen, was es dann erlaubt, den motorischen Schwenkantrieb entsprechend schwächer und damit kostengünstiger auszubilden.

Z.B. um den motorischen Schwenkantrieb während des eigentlichen Schnitt- bzw. Sägevorgangs zu entlasten sehen bevorzugte Ausgestaltungsformen der Erfindung vor, dass die Sägeeinrichtung eine Arretiereinrichtung zur Arretierung des Kreissägeblattspindelträgers in zumindest einer Stellung, vorzugsweise in voneinander verschiedenen Stellungen, des Kreissägeblattspindelträgers, vorzugsweise relativ zur Schwenkachse, aufweist. Für solche Arretiereinrichtungen gibt es unterschiedlichste Ausgestaltungsmöglichkeiten. Sie können grundsätzlich auf Reib- oder Formschluss beruhen. Auch magnetische, elektromagnetische, elektrostatische oder andere Arretiereinrichtungen sind denkbar. In einer einfachen Ausgestaltungsform kann es sich bei der Arretiereinrichtung um einen, vorzugsweise federbelasteten, Arretierbolzen handeln, der entweder reibschlüssig oder durch Formschluss in seiner Arretierstellung dafür sorgt, dass der Kreissägeblattspindelträger nicht bewegbar ist bzw. nicht um die Schwenkachse verschwenkt werden kann. Die Arretiereinrichtungen können von Hand, aber auch motorisch bzw. ferngesteuert, angesteuert werden. Vorzugsweise wirken die Arretiereinrichtungen zwischen dem Kreissägeblattspindelträger und dem weiter unten noch näher erläuterten Schwenkachsenträger bzw. Sägewagen.

Für den Kreissägeblattspindelträger gibt es verschiedene Ausgestaltungsformen. Eine erste Art hiervon sieht vor, dass der Kreissägeblattspindelträger ein, um die Schwenkachse schwenkbarer und die Kreissägeblattdrehachse mit der Schwenkachse direkt verbindender Schwenkarm ist. Mit anderen Worten handelt es sich bei diesem Schwenkarm um einen Hebel, der die Schwenkachse mit der Kreissägeblattdrehachse direkt verbindet und um die Schwenkachse schwenkbar ist.

Diese direkte Verbindung zwischen Schwenkachse und Kreissägeblattdrehachse mittels des Kreissägeblattspindelträgers muss aber nicht zwingend vorgesehen sein. In alternativen Ausgestaltungsformen kann auch vorgesehen sein, dass der Kreissägeblattspindelträger ein, an einem Schwenkachsenträger entlang der kreisbogenabschnittsförmig ausgebildeten Führungseinrichtung bewegbarer Schlitten ist. In diesen Ausgestaltungsformen ist vorzugsweise vorgesehen, dass dieser Schlitten entlang von zumindest zwei der kreisbogenabschnittsförmig ausgebildeten Führungseinrichtungen bewegbar bzw. geführt ist.

Bei bevorzugten Ausgestaltungsformen der Erfindung ist vorgesehen, dass die Schwenkachse am und ortsfest in Relation zu dem bzw. einem Schwenkachsenträger angeordnet ist. Der Schwenkachsenträger wurde eingangs bereits mehrfach erwähnt. Bevorzugt ist vorgesehen, dass der Schwenkachsenträger ein entlang zumindest einer Transportbahn verschiebbarer Sägewagen ist. Die Transportbahn kann z.B. linear ausgebildet sein. Günstigerweise ist zumindest ein Motor zum Verschieben des Schwenkachsenträgers bzw. Sägewagens entlang der Transportbahn vorgesehen. Bei der Transportbahn kann es sich z.B. um zumindest eine Schiene oder dergleichen handeln. Der motorische Antrieb des Sägewagens kann, wie an sich bekannt, über Zahnstangen, Kolben-Zylinder-Einheiten, Ketten oder Riemen, Spindelgetriebe, Zugseile usw. realisiert werden.

Insbesondere für Sägeeinrichtungen mit hoher Schnittleistung sieht ein in Kombination mit der vorab geschilderten Erfindung weiterer bevorzugter Aspekt der Erfindung eine Sägeeinrichtung, insbesondere Unterflurkreissäge für eine Plattenaufteilanlage, mit zumindest einer, um eine Kreissägeblattdrehachse drehbar an einem Kreissägeblattspindelträger gelagerten Kreissägeblattaufnahmespindel, an der ein Kreissägeblatt befestigbar oder befestigt ist, und einem Kreissägeblattantriebsmotor zum Drehen der Kreissägeblattaufnahmespindel um die Kreissägeblattdrehachse vor, wobei die Sägeeinrichtung zumindest eine Kühlmediendüse zum Aufbringen von Kühlmedium auf eine zu kühlende Sägeoberfläche des an der Kreissägeblattaufnahmespindel befestigten Kreissägeblatts aufweist. Dieser zweite bevorzugte Aspekt der Erfindung ist mit den vorgehend und auch nachfolgend genannten Merkmalen verschiedener Ausgestaltungsformen der erstgenannten Erfindung soweit anwendbar, auch einzeln frei kombinierbar. Dieser zweite Aspekt kann aber auch bei anderen Sägeeinrichtungen eingesetzt werden, bei denen der Kreissägeblattspindelträger mit seiner Kreissägeblattdrehachse anders, z.B. entlang von linearen Führungsbahnen bewegt wird.

Bei der Sägeoberfläche handelt es sich um die Oberfläche des Kreissägeblatts, welche den tatsächlichen Schnittvorgang durchführt. Diese trägt in der Regel Sägezähne. Sie kann aber auch diamantbesetzt oder anderweitig als Schneide ausgebildet sein. Bei dem Kühlmedium kann es sich sowohl um gasförmige als auch flüssige Kühlmedien handeln. Eine einfache Form des gasförmigen Kühlmediums wäre Druckluft. Eine einfache Form des flüssigen Kühlmediums wäre Wasser. Um die Kühlfunktion mittels der Kühlmediendüse in möglichst allen Verschwenkstellungen bzw. Betriebsstellungen des Kreissägeblatts in gleicher Art und Weise aufrecht zu erhalten, ist günstigerweise vorgesehen, dass die Sägeeinrichtung eine Abstandssteuereinrichtung aufweist, welche den Abstand zwischen der Kühlmediendüse und der zu kühlenden Sägeoberfläche des Kreissägeblattes bei voneinander verschiedenen Stellungen des Kreissägeblattspindelträgers einstellt. Insbesondere diese Einstellbarkeit des Abstandes zwischen der Kühlmediendüse und der zu kühlenden Sägeoberfläche des Kreissägeblattes kann ebenfalls bei verschiedenen Sägeeinrichtungen eingesetzt werden. Sie ist sowohl bei Sägeeinrichtungen gemäß der Erfindung einsetzbar, bei denen der Kreissägeblattspindelträger zusammen mit der Kreissägeblattaufnahmespindel mit deren Kreissägeblattdrehachse auf einer kreisbogenabschnittsförmigen Bahn um eine von der Kreissägeblattdrehachse distanziert angeordnete Schwenkachse der Sägeeinrichtung schwenkbar gelagert ist. Die genannte Einstellbarkeit kann aber auch genauso bei Sägeeinrichtungen mit linear oder anderweitig verfahrbaren Kreissägeblattdrehachsen eingesetzt werden. Vorzugsweise hält diese Abstandssteuereinrichtung den genannten Abstand zumindest im Wesentlichen konstant. Im Wesentlichen konstant bedeutet dabei zunächst einmal, dass der Abstand so konstant gehalten wird, dass keine in der Praxis relevanten Änderungen in der Kühlwirkung in Abhängigkeit der Stellung bzw. Verschwenkstellung des Kreissägeblatts entstehen. Günstigerweise umfasst der Begriff "im Wesentlichen konstant" dabei den Bereich, bei dem Abweichungen von maximal 10% bezogen auf den kürzesten möglichen Abstand zulässig sind. Die Abstandssteuereinrichtung kann in bevorzugten Ausgestaltungsformen den genannten Abstand automatisch in Abhängigkeit der Stellung des Kreissägeblattspindelträgers einstellen bzw. nachstellen. Einfache mechanische Lösungen bestehen z.B. darin, dass die Abstandssteuereinrichtung entsprechende Abstandsteuernocken oder Abstandssteuerkulissen aufweist oder daraus besteht.

Weitere Merkmale und Einzelheiten bevorzugter Ausgestaltungsformen der verschiedenen Aspekte der Erfindung werden nachfolgend anhand von zwei Ausführungsbeispielen erläutert. Dabei zeigen:
Fig. 1 bis 4 Darstellungen zum ersten Ausführungsbeispiel der Erfindung,
Fig. 5 und 6 Darstellungen zum zweiten Ausführungsbeispiel der Erfindung und
Fig. 7 eine alternative Ausgestaltungsform, die nicht unter dem Stutzumfang der Ansprüche fällt.

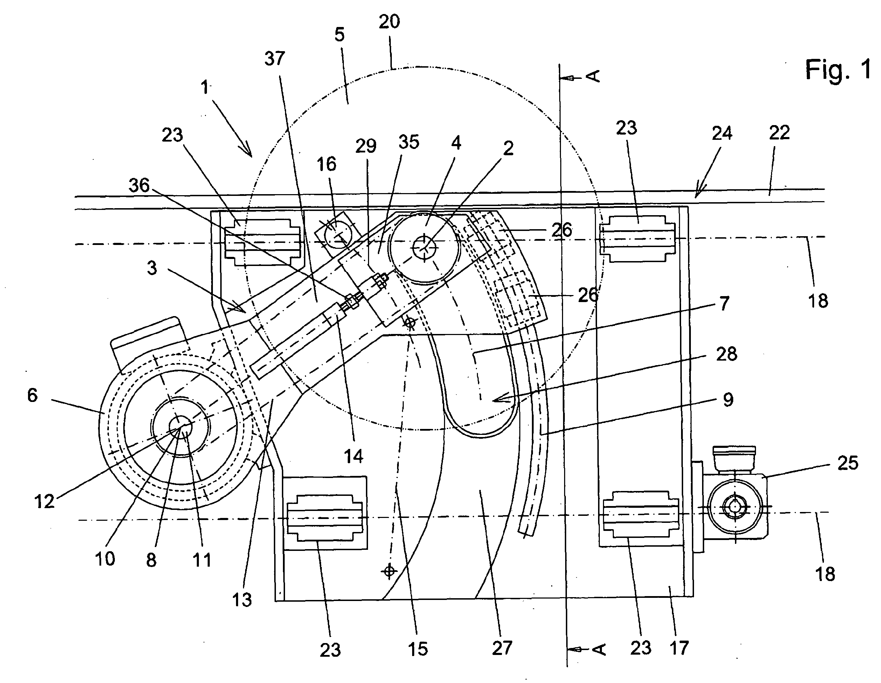

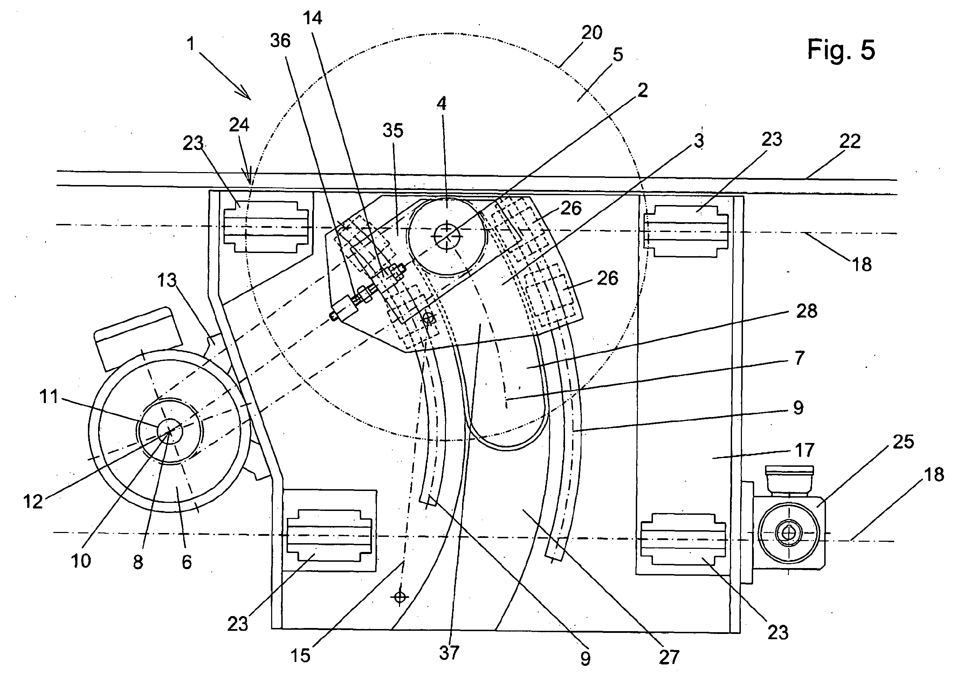

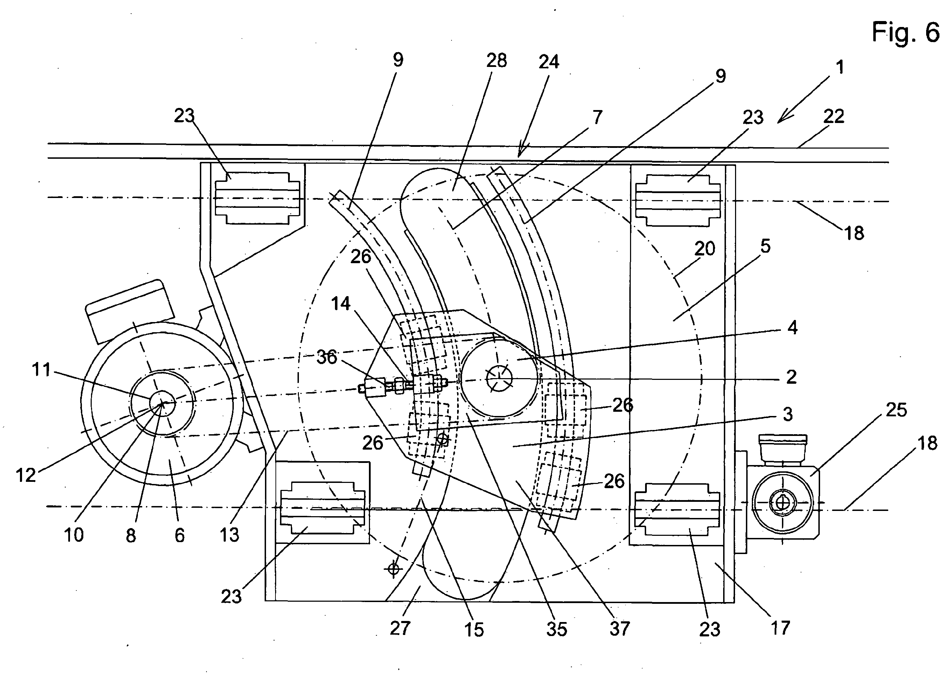

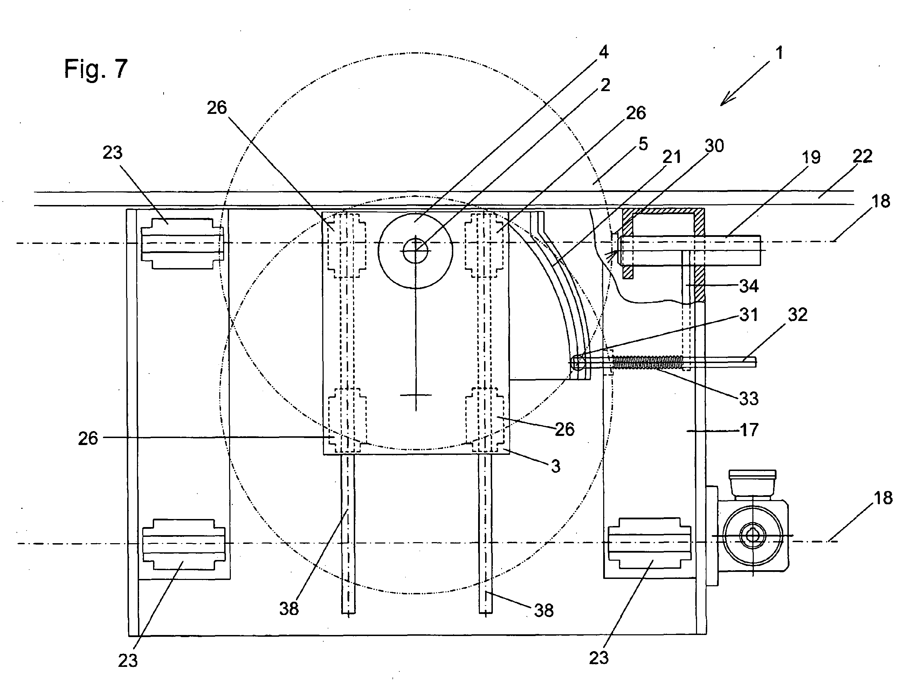

Bei allen hier gezeigten Ausführungsbeispielen handelt es sich bei der Sägeeinrichtung 1 um eine sogenannte Unterflurkreissäge, wie sie insbesondere bei Plattenaufteilanlagen zum Einsatz kommen kann. Die Ausführungsbeispiele umfassen eine Vielzahl von analog ausgebildeten Merkmalen. Daher wird nun zunächst einmal das erste Ausführungsbeispiel gemäß der Fig. 1 bis 4 ausführlich erläutert. Bei dem zweiten Ausführungsbeispiel gemäß der Fig. 5 und 6 wird dann im Wesentlichen nur noch auf die Unterschiede eingegangen. Das gleiche gilt auch für die Variante gemäß Fig. 7

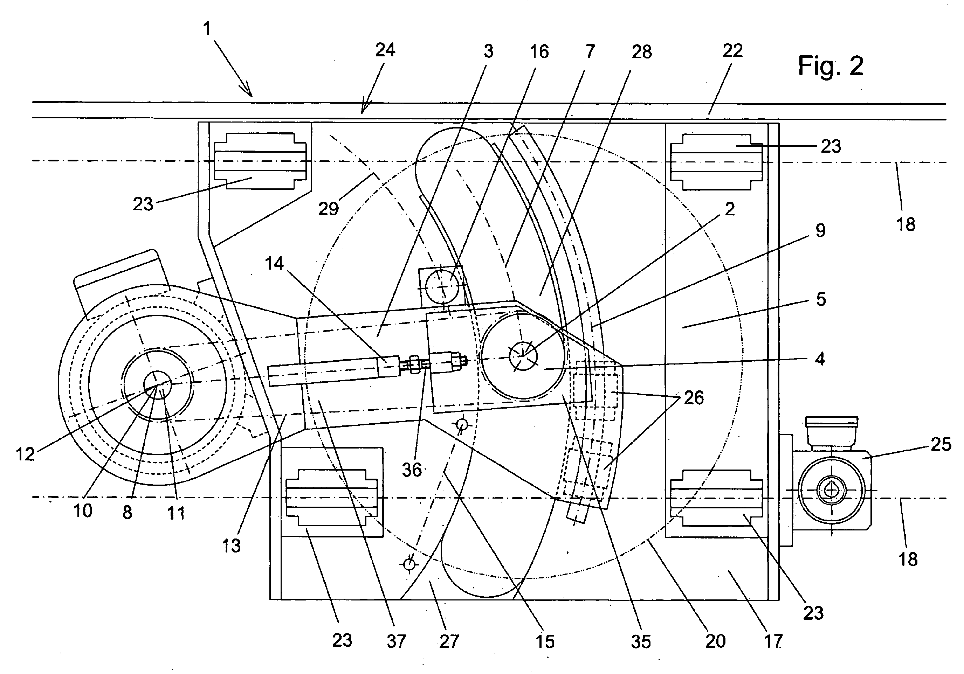

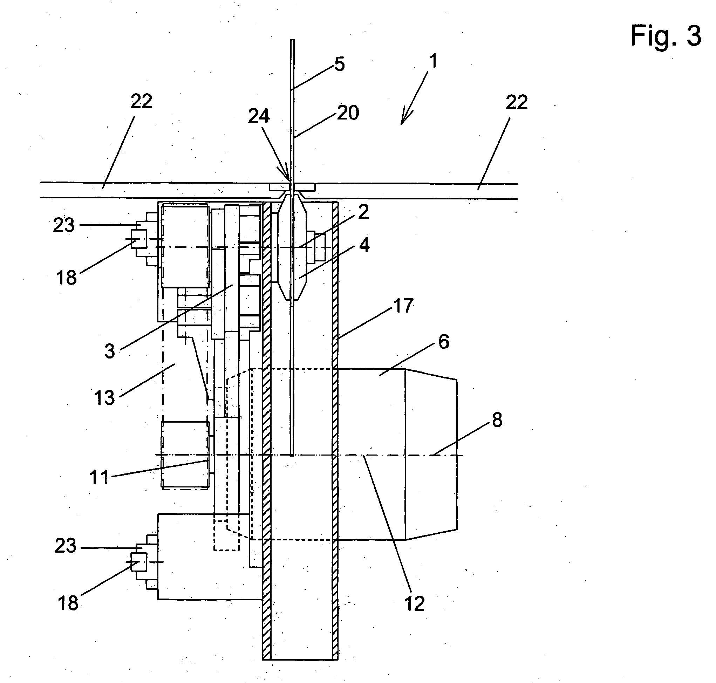

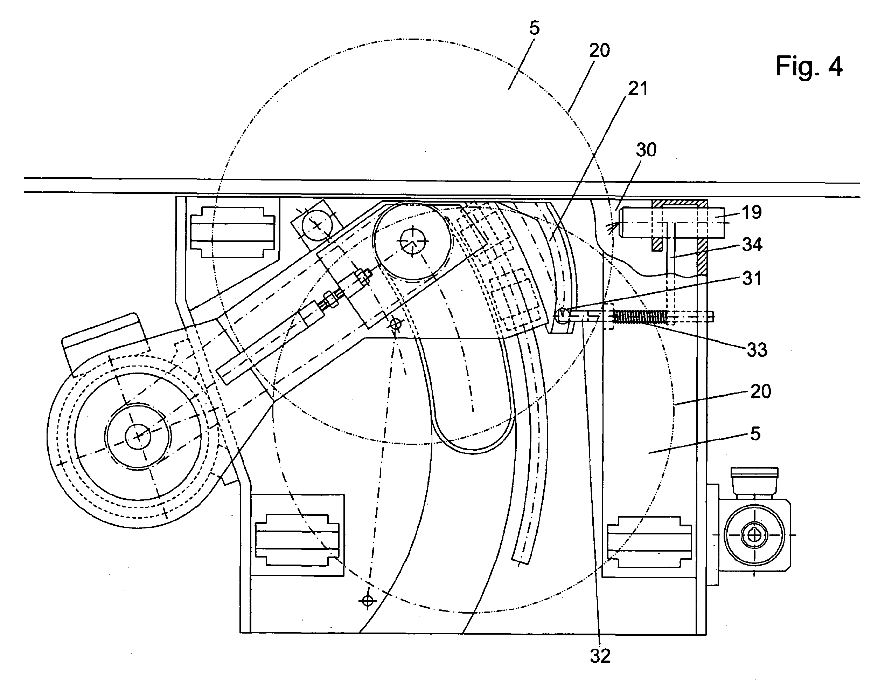

Beim ersten Ausführungsbeispiel ist in Fig. 1 die Betriebsstellung gezeigt, bei der das Kreissägeblatt 5 über den Auflagetisch 22 angehoben ist. In dieser Betriebsstellung kann das auf dem Auflagetisch 22 aufliegende Werkstück, dies können einzelne Platten, ein Plattenstapel oder ein sonstiges Werkstück sein, mittels des Kreissägeblattes 5 zersägt werden. Fig. 2 zeigt dieses Ausführungsbeispiel, wobei der Kreissägeblattspindelträger 3 zusammen mit der Kreissägeblattaufnahmespindel 4 und dem Kreissägeblatt 5 so weit um die Schwenkachse 8 herum nach unten geschwenkt ist, dass das Kreissägeblatt 5 vollständig unter den Auflagetisch 22 abgesenkt ist. Diese Betriebsstellung kann z.B. dazu benutzt werden, den gesamten, hier als Sägewagen ausgeführten, Schwenkachsenträger 17 entlang des Sägespalts 24 im Auflagetisch 22 und damit entlang der Transportbahn 18 zu verfahren, ohne dass dabei das Kreissägeblatt 5 mit einem Werkstück oder einem anderen Gegenstand auf dem Auflagetisch 22 kollidieren kann. Das Absenken des Kreissägeblatts kann auch als Sicherheitsmaßnahme genutzt werden, um Verletzungen des Bedienpersonals zu vermeiden. Fig. 3 zeigt den Schnitt entlang der Schnittlinie AA aus Fig. 1. In Fig. 4 ist die bei diesem Ausführungsbeispiel vorgesehene Kühleinrichtung für das Kreissägeblatt 5 gezeigt.

Der hier als Sägewagen ausgebildete Schwenkachsenträger 17 ist im gezeigten Ausführungsbeispiel entlang der Transportbahnen 18 und damit entlang des Sägespalts 24 linear verfahrbar. Die Transportbahnen 18 können z.B. als entsprechende Schienen ausgebildet sein. Im gezeigten Ausführungsbeispiel ist der Schwenkachsenträger 17 mittels der an ihm angebrachten Transportbahnführungen 23 verschiebbar auf den Transportbahnen 18 gelagert. Es ist auch ein motorischer Transportantrieb 25 vorgesehen, der dazu dient, den gesamten Schwenkachsenträger 17 und damit letztendlich auch das Kreissägeblatt 5 entlang des Sägespalts 24 zu verfahren. Die Art der Lagerung und des Antriebs dieses Sägewagens 17 kann abweichend von den hier gezeigten Ausführungsbeispielen natürlich auch in jeder anderen, beim Stand der Technik an sich bekannten Art und Weise ausgeführt sein.

In der gezeigten, wie auch bei anderen bevorzugten Ausgestaltungsformen der Erfindung, ist die Schwenkachse 8 ortsfest in Relation zum Schwenkachsenträger 17 an diesem angeordnet. Günstigerweise trägt dieser Schwenkachsenträger 17 bzw. Sägewagen auch den Kreissägeblattantriebsmotor 6, wie dies in den beiden hier gezeigten Ausführungsbeispielen auch realisiert ist. Der Kreissägeblattantriebsmotor 6 weist eine von ihm angetriebene Antriebswelle 11 auf, deren Antriebswellendrehachse 12 in bevorzugten Ausführungsformen, wie den hier gezeigten, koaxial zur Schwenkachse 8 angeordnet ist.

Das Kreissägeblatt 5 selbst ist gemeinsam mit der Kreissägeblattaufnahmespindel 4 um die Kreissägeblattdrehachse 2 drehbar am Kreissägeblattspindelträger 3 gelagert. Im ersten Ausführungsbeispiel gemäß der Fig. 1 bis 4 handelt es sich beim Kreissägeblattspindelträger 3 um einen, um die Schwenkachse 8 schwenkbar gelagerten und die Kreissägeblattdrehachse 2 mit der Schwenkachse 8 verbindenden Schwenkarm. Dieser Kreissägeblattspindelträger 3 ist zusammen mit der Kreissägeblattaufnahmespindel 4 und dem daran gegebenenfalls angebrachten Kreissägeblatt 5 um die Schwenkachse 8 in der Art und Weise verschwenkbar, dass die Kreissägeblattdrehachse 2 während der Schwenkbewegung auf der kreisbogenabschnittsförmigen Bahn 7 läuft.

Zur stabilen Führung des Kreissägeblattspindelträgers 3 und der daran angeordneten Bauteile und zur zumindest weitgehenden Vermeidung von Vibrationen beim Sägevorgang ist der Kreissägeblattspindelträger 3 erfindungsgemäß an zumindest einer kreisbogenabschnittsförmig ausgebildeten Führungseinrichtung 9 der Sägeeinrichtung 1 beim Verschwenken um die Schwenkachse 8 bzw. immer geführt und damit auch abgestützt. Der Kreismittelpunkt 10 der kreisbogenabschnittsförmig ausgebildeten Führungseinrichtung 9 liegt günstigerweise, wie in den hier gezeigten Ausführungsbeispielen auch realisiert, auf der Schwenkachse 8. Weiters ist bevorzugt, wie hier auch realisiert, vorgesehen, dass die Antriebswellendrehachse 12 der Antriebswelle 11 des Kreissägeblattantriebsmotors 6 koaxial zu dieser Schwenkachse 8 angeordnet ist. Hierdurch ergibt sich ein sehr effektiver und einfacher Aufbau, der es erlaubt, die Drehbewegung der Antriebswelle 11 mit nur einem einzigen Antriebsriemen 13 ohne weitere Umlenkung auf die Kreissägeblattaufnahmespindel 4 und damit auf das Kreissägeblatt 5 zu übertragen. Hierdurch ist ein besonders einfacher und wartungsarmer Riemenantrieb mit nur zwei Riemenscheiben geschaffen.

Wie eingangs erwähnt, kann anstelle des gezeigten Riemenantriebes aber natürlich auch ein Kettenantrieb oder ein sonstiges Getriebe verwendet werden. Z.B. ist auch der Einsatz von Kombinationen von Zahnrädern und Antriebsstangen denkbar, um die Drehbewegung der Antriebswelle 11 auf die Kreissägeblattaufnahmespindel 4 zu übertragen.

Im gezeigten Ausführungsbeispiel ist die erfindungsgemäße kreisbogenabschnittsförmig ausgebildete Führungseinrichtung 9 als Schiene ausgebildet. Der Kreissägeblattspindelträger 3 ist mit dieser Führungseinrichtung 9 mittels der Führungseingriffselemente 26 in Eingriff. Abweichend vom hier gezeigten Ausführungsbeispiel, bei dem die Führungseinrichtung 9 am Schwenkachsenträger 17 also am Sägewagen und die Führungseingriffselemente 26 am Kreissägeblattspindelträger 3 angeordnet sind, ist natürlich auch die umgekehrte Anordnung denkbar, bei der der Kreissägeblattspindelträger 3 die Führungseinrichtung 9 und der Schwenkachsenträger 17 die Führungseingriffselemente 26 trägt bzw. aufweist. Darüber hinaus sind auch noch anderweitig ausgebildete Führungseinrichtungen in Form von Nuten möglich, so lang sie eben die geforderte kreisbogenabschnittsförmige Ausgestaltung aufweisen.

Um den Antriebsriemen 13 spannen zu können, ist im ersten, wie auch im zweiten Ausführungsbeispiel eine Spanneinrichtung in Form der Abstandsverstelleinrichtung 14 realisiert, die es erlaubt, den Abstand zwischen der Schwenkachse 8 und der Kreissägeblattdrehachse 2 zu verstellen und in den verstellten Positionen zu arretieren. Im gezeigten Ausführungsbeispiel ist dies beispielhaft dadurch realisiert, dass der Kreissägeblattspindelträger 3 einen Grundkörper 37 aufweist, an dem ein Kreissägespindellagerbock 35 verschiebbar gelagert ist. Mittels der Spannschraube 36 kann der Kreissägespindellagerbock 35, welcher die Kreissägeblattaufnahmespindel 4 drehbar lagert, relativ zum Grundkörper in Längsrichtung der Spannschraube 36 verstellt werden, womit der Abstand zwischen der Kreissägeblattdrehachse 2 und der Schwenkachse 8 variiert werden kann z.B. um den Antriebsriemen 13 oder eine stattdessen verwendete Antriebskette zu spannen.

Der Vollständigkeit halber ist darauf hinzuweisen, dass die Ausnehmung 28 im Schwenkachsenträger 17, durch die die Kreissägeblattaufnahmespindel 4 hindurchgeführt ist, einen entsprechenden Toleranzbereich aufweist, der diese Verstellmöglichkeit zulässt.

Weiters ist auch darauf hinzuweisen, dass die nötige Spannung eines Antriebsriemens 13 oder einer Antriebskette natürlich auch anderweitig zur Verfügung gestellt werden kann. So ist es auch denkbar, dem Antriebsriemen 13 bzw. der Antriebskette eine entsprechende Elastizität mitzugeben oder eine innen oder außen am Riemenantrieb angeordnete Spannrolle vorzusehen, welche entsprechend federbelastet oder angetrieben ist und den Riemen 13 bzw. die Kette spannt.

Um den Kreissägeblattspindelträger 3 zusammen mit der Kreissägeblattaufnahmespindel 4 und dem Kreissägeblatt 5 um die Schwenkachse 8 verschwenken zu können, ist im gezeigten Ausführungsbeispiel, wie auch in anderen bevorzugten Varianten, ein motorischer Schwenkantrieb 15 vorgesehen. Wie eingangs erwähnt, können hierzu beliebige beim Stand der Technik bekannte und geeignete Schwenkantriebe verwendet werden. Bevorzugte Ausgestaltungsformen wie die hier gezeigten, sehen jedoch vor, dass es sich beim motorischen Schwenkantrieb 15 um einen Linearantrieb handelt. Dieser ist günstigerweise sowohl am Schwenkachsenträger 17 als auch am Kreissägeblattspindelträger 3 schwenkbar gelagert. In den Figuren ist dieser motorische Schwenkantrieb 15 nur strichliert und damit schematisiert dargestellt. Es kann sich, wie eingangs erwähnt, um jeden beliebigen geeigneten Linearantrieb handeln. Besonders bevorzugt kommen Kolben-Zylinder-Einheiten, seien sie nun pneumatische oder hydraulische, z.B. in Form von Druckzylindern oder Spindelantriebe zum Einsatz. Mit diesem motorischen Schwenkantrieb 15 kann dann jedenfalls die Schwenkbewegung um die Schwenkachse 8 ausgeführt werden, womit das Kreissägeblatt 5 von der Betriebsstellung gemäß Fig. 1 in die zurückgezogene Stellung gemäß Fig. 2 und zurück sowie in jede beliebige Zwischenstellung verfahren werden kann.

Um den motorischen Schwenkantrieb 15 nicht unnötig stark ausbilden zu müssen, kann eine Vorspanneinrichtung, welche hier nicht im Detail dargestellt ist, realisiert werden, welche den Kreissägeblattspindelträger 3 z.B. entgegen der Schwerkraft in Richtung der entsprechenden Schwenkbewegung um die Schwenkachse 8 vorspannt. Es kann sich hierbei um entsprechende Federn oder Federpakete oder dergleichen handeln. Diese können z.B. zwischen Kreissägeblattspindelträger 3 und dem Schwenkachsenträger 17 wirken bzw. zwischen diesen aufgespannt sein.

Eine andere bevorzugte Maßnahme zur Entlastung des motorischen Schwenkantriebs 15 ist das Vorsehen einer Arretiereinrichtung 16, die es erlaubt, den Kreissägeblattspindelträger 3 z.B. in der in Fig. 1 gezeigten Betriebsstellung, vorzugsweise in jeder Betriebsstellung, gegenüber dem Schwenkachsenträger 17 zu arretieren. Wie eingangs ausgeführt, kann diese Arretiereinrichtung 16 sehr unterschiedlich ausgebildet sein. Es kann sich z.B. um einen Arretierbolzen handeln, welcher federbelastet reibschlüssig gegen den Schwenkachsenträger 17 drückt oder in eine hier schematisch eingezeichnete Klemmschiene 29 eingreift. Alternativ wäre auch ein formschlüssiger Eingriff in entsprechenden Ausnehmungen des Schwenkachsenträgers 17 denkbar. Günstigerweise ist die Arretiereinrichtung 16 jedenfalls motorisch ansteuerbar.

Im gezeigten Ausführungsbeispiel ist, wie auch in anderen bevorzugten Ausführungsbeispielen, vorgesehen, dass die Ausnehmung 28, durch die die Kreissägeblattaufnahmespindel 4 hindurchgeführt ist, mittels einer Abdeckeinrichtung 27 zumindest bereichsweise verdeckt ist. Günstigerweise ist die Abdeckeinrichtung 27 gemeinsam mit dem Kreissägeblattspindelträger 3 und damit mit der Kreissägeblattaufnahmespindel 4 um die Schwenkachse 8 verschwenkbar. Die Abdeckeinrichtung 27 kann verhindern, dass Sägespäne den Bereich des Sägeantriebs verschmutzen. Des Weiteren wird die Wirkung einer eventuell vorhandenen Absaugeinrichtung für die Sägespäne wesentlich verbessert. Die Abdeckeinrichtung 27 kann einteilig oder durch mehrere ineinander schiebbare Elemente oder auch als Faltenbalg oder als umgelenktes flexibles Band ausgeführt werden, nur um einige Beispiele zu nennen.

In Fig. 3 ist der Schnitt AA aus Fig. 1 gezeigt. Hier ist besonders gut zu sehen, wie das Sägeblatt 5 in seiner Betriebsstellung durch den Sägespalt 24 hindurch über den Auflagetisch 22 angehoben ist, um die entsprechenden auf dem Auflagetisch 22 aufliegenden, hier nicht dargestellten Werkstücke zu zersägen.

In Fig. 4 ist die, bei diesem ersten Ausführungsbeispiel vorhandene Kühleinrichtung gemäß des zweiten bevorzugten Aspekts der Erfindung für das Kreissägeblatt 5 gezeigt. Es kann sich hier wie auch in anderen Varianten hierbei um eine Kühl- aber auch um eine Schmiereinrichtung zur Erhöhung der Kühl- und Schmierwirkung am Kreissägeblatt 5 handeln. In der gezeigten Ausführungsform handelt es sich um eine Kühlmediendüse 19, mit der flüssiges und/oder gasförmiges Kühlmedium und/oder auch Schmiermittel auf die Sägeoberfläche 20 des Kreissägeblatts 5 aufgesprüht werden kann. Insofern könnte die Kühlmediendüse 19 auch als Schmiermitteldüse oder als Kühl- und Schmiermitteldüse bezeichnet werden. Bei bevorzugten, wie den hier vorgesehenen Ausgestaltungsformen ist dabei eine Abstandssteuereinrichtung vorgesehen, welche den Abstand 30 zwischen der Kühlmediendüse 19 bzw. deren Kühlmedienaustrittsbereich und der zu kühlenden Sägeoberfläche 20 des Kreissägeblatts 5 bei voneinander verschiedenen Verschwenkstellungen des Kreissägeblattspindelträgers 3 relativ zur Schwenkachse 8 einstellbar macht. Bevorzugt ist dabei vorgesehen, dass diese Abstandssteuereinrichtung den Abstand 30 im Wesentlichen konstant hält, wie dies bereits eingangs ausgeführt ist. Im gezeigten Ausführungsbeispiel, wie auch bei anderen möglichen Varianten, kann dies wie in Fig. 4 dargestellt, mittels einer Abstandssteuerkulisse 21 ausgeführt sein. In diese greift der Stößel 32 mit seiner Laufrolle 31 ein. Der Stößel 32 ist im gezeigten Ausführungsbeispiel mittels der Druckfeder 33 vorgespannt. Seine Bewegung beim Entlanglaufen der Laufrolle 31 an der Abstandssteuerkulisse 21 wird im gezeigten Ausführungsbeispiel mittels des Hebels 34 auf die Kühlmediendüse 19 übertragen, was zur Folge hat, dass der Abstand 30 beim Verschwenken des Kreissägeblattspindelträgers 3 um die Schwenkachse 8 in der gewünschten Art und Weise eingestellt bzw. konstant gehalten wird.

Wie bereits eingangs erläutert, gleicht das zweite Ausführungsbeispiel gemäß der Fig. 5 und 6 im Wesentlichen dem ersten Ausführungsbeispiel. Als wesentlicher Unterschied ist aber festzuhalten, dass in diesem zweiten Ausführungsbeispiel der Kreissägeblattspindelträger 3 nicht als Schwenkarm, sondern als entlang von zwei Führungseinrichtungen 9 geführter Schlitten ausgebildet ist. Es besteht also keine direkte Verbindung zwischen dem Kreissägeblattspindelträger 3 und der Schwenkachse 8. Ansonsten sind hier bei diesem Ausführungsbeispiel die Arretiereinrichtung 16 und auch die Kühlmediendüse 19 weggelassen. Der Rest entspricht im Wesentlichen dem ersten Ausführungsbeispiel und muss daher nicht noch einmal beschrieben werden.

Fig. 7 zeigt nun noch ein Ausführungsbeispiel, das nicht dem Schutzumfang der Ansprüche fällt . Bei dieser Variante sind die Kreissägeblattdrehachse 2 bzw. der Kreissägeblattspindelträger 3 bzw. die Kreissägeblattaufnahmespindel 4 nicht schwenkbar um eine Schwenkachse 8 sondern entlang von linearen Führungseinrichtungen 38 linear verschiebbar am Sägewagen 17 geführt. Entsprechend handelt es sich hier beim Sägewagen 17 auch nicht um einen Schwenkachsenträger. Durch Verschieben des Kreissägeblattspindelträgers 3 entlang der linearen Führungseinrichtung 38 kann das Kreissägeblatt 5 über den Auflagetisch 22 angehoben und aber auch wieder unter diesen abgesenkt werden. Arretiereinrichtungen 16 sind hier nicht dargestellt, können aber entsprechend ausgeführt sein. Der Sägewagen 17 ist wie in den anderen Ausführungsbeispielen mittels der Transportbahnführungen 23 an den Transportbahnen 18 geführt. Die Führungseingriffselemente 26 greifen in die hier als Schienen ausgebildeten linearen Führungseinrichtungen 38 ein. Zu diesen realisierten Linearführungen entlang der Transportbahn 18 und der linearen Führungseinrichtung 38 gibt es natürlich andere, hier nicht noch einmal explizit aufgeführte Varianten. Kern der Fig. 7 ist jedenfalls die Aussage, dass die Einstellung des Abstandes zwischen der Kühlmediendüse 19 und der Sägeoberfläche 20 des Kreissägeblatts 5 auch bei solchen linear oder anderweitig geführten Kreissägeblattspindelträgern 3 eingesetzt werden kann, um je nach Stellung des Kreissägeblatts den optimalen Abstand zwischen Kühlmediendüse 19 und Sägeoberfläche 20 einzustellen bzw. diesen möglichst konstant zu halten. Auch in diesem Ausführungsbeispiel ist dies technisch über eine entsprechende Abstandssteuerkulisse 21 gelöst, in die mittels der Laufrolle 31 der Stößel 32 eingreift, welcher über den Hebel die Kühlmediendüse 19 mitführt. Für diese konkrete technische Ausführung gibt es aber natürlich auch Alternativen.

### Legende

### zu den Hinweisziffern:

| | | | |
|---|---|---|---|
| 1 | Sägeeinrichtung | 28 | Ausnehmung |
| 2 | Kreissägeblattdrehachse | 29 | Klemmschiene |
| 3 | Kreissägeblattspindelträger | 30 | Abstand |
| 4 | Kreissägeblattaufnahmespindel35 | 31 | Laufrolle |
| 5 | Kreissägeblatt | 32 | Stößel |
| 6 | Kreissägeblattantriebsmotor | 33 | Druckfeder |
| 7 | kreisbogenabschnittsförmige Bahn | 34 | Hebel |
| | | 35 | Kreissägespindellagerbock |
| 8 | Schwenkachse | 36 | Spannschraube |
| 9 | Führungseinrichtung | 37 | Grundkörper |
| 10 | Kreismittelpunkt | 38 | lineare Führungseinrichtung |
| 11 | Antriebswelle | | |
| 12 | Antriebswellendrehachse | | |
| 13 | Antriebsriemen | | |
| 14 | Abstandsverstelleinrichtung | | |
| 15 | motorischer Schwenkantrieb | | |
| 16 | Arretiereinrichtung | | |
| 17 | Schwenkachsenträger | | |
| 18 | Trarisportbahn | | |
| 19 | Kühlmediendüse | | |
| 20 | Sägeoberfläche | | |
| 21 | Abstandssteuerkulisse | | |
| 22 | Auflagetisch | | |
| 23 | Transportbahnführung | | |
| 24 | Sägespalt | | |
| 25 | Transportantrieb | | |
| 26 | Führungseingriffselement | | |
| 27 | Abdeckeinrichtung | | |

## Patentansprüche

1. Sägeeinrichtung (1), insbesondere Unterflurkreissäge für eine Plattenaufteilanlage, mit zumindest einer, um eine Kreissägeblattdrehachse (2) drehbar an einem Kreissägeblattspindelträger (3) gelagerten Kreissägeblattaufnahmespindel (4), an der ein Kreissägeblatt (5) befestigbar oder befestigt ist, und einem Kreissägeblattantriebsmotor (6) zum Drehen der Kreissägeblattaufnahmespindel (4) um die Kreissägeblattdrehachse (2), wobei der Kreissägeblattspindelträger (3) zusammen mit der Kreissägeblattaufnahmespindel (4) mit deren Kreissägeblattdrehachse (2) auf einer kreisbogenabschnittsförmigen Bahn (7) um eine von der Kreissägeblattdrehachse (2) distanziert und zur Kreissägeblattdrehachse (2) parallel angeordnete Schwenkachse (8) der Sägeeinrichtung (1) schwenkbar gelagert ist, und die Sägeeinrichtung (1) zumindest eine kreisbogenabschnittsförmig ausgebildete Führungseinrichtung (9) aufweist, von der der Kreissägeblattspindelträger (3) beim Verschwenken um die Schwenkachse (8) geführt ist, **dadurch gekennzeichnet, dass** die kreisbogenabschnittsförmig ausgebildete Führungseinrichtung (9) eine Führungsschiene und/oder eine Führungsnut ist oder aufweist.

2. Sägeeinrichtung (1) nach Anspruch 1, **dadurch gekennzeichnet, dass** die Sägeeinrichtung (1) zumindest eine Kühlmediendüse (19) zum Aufbringen von Kühlmedium auf eine zu kühlende Sägeoberfläche (20) des an der Kreissägeblattaufnahmespindel (4) befestigten Kreissägeblatts (5) aufweist.

3. Sägeeinrichtung (1) nach Anspruch 2, **dadurch gekennzeichnet, dass** die Sägeeinrichtung (1) eine Abstandssteuereinrichtung, vorzugsweise in Form zumindest eines Abstandssteuernockens oder einer Abständssteuerkulisse (21) aufweist, welche den Abstand (30) zwischen der Kühlmediendüse (19) und der zu kühlenden Sägeoberfläche (20) des Kreissägeblatts (5) bei voneinander verschiedenen Stellungen des Kreissägeblattspindelträgers (3), vorzugsweise voneinander verschiedenen Verschwenkstellungen des Kreissägeblattspindelträgers (3) relativ zur Schwenkachse (8), einstellt, vorzugsweise zumindest im Wesentlichen konstant hält.

4. Sägeeinrichtung (1) nach einem der Ansprüche 1 bis 3, **dadurch gekennzeichnet, dass** ein Kreismittelpunkt (10) der kreisbogenabschnittsförmig ausgebildeten Führungseinrichtung (9) auf der Schwenkachse (8) liegt.

5. Sägeeinrichtung (1) nach einem der Ansprüche 1 bis 4, **dadurch gekennzeichnet, dass** eine vom Kreissägeblattantriebsmotor (6) angetriebene Antriebswelle (11) des Kreissägeblattantriebsmotors (6) um eine koaxial zur Schwenkachse (8) angeordnete Antriebswellendrehachse (12) drehbar ist.

6. Sägeeinrichtung (1) nach Anspruch 5, **dadurch gekennzeichnet, dass** die Antriebswelle (11) des Kreissägeblattantriebsmotors (6) und die Kreissägeblattaufnahmespindel (4) mittels zumindest eines, vorzugsweise mittels einer Spanneinrichtung spannbaren, Antriebsriemens (13) oder mittels zumindest einer, vorzugsweise mittels einer Spanneinrichtung spannbaren, Antriebskette oder mittels eines sonstigen Getriebes, vorzugsweise Zahnradgetriebes, zum Drehen der Kreissägeblattaufnahmespindel (4) miteinander verbunden sind.

7. Sägeeinrichtung (1) nach einem der Ansprüche 1 bis 6, **dadurch gekennzeichnet, dass** der Abstand zwischen der Schwenkachse (8) und der Kreissägeblattdrehachse (2) mittels einer Abstandsverstelleinrichtung (14) verstellbar ist.

8. Sägeeinrichtung (1) nach einem der Ansprüche 1 bis 7, **dadurch gekennzeichnet, dass** die Kreissägeblattdrehachse (2), vorzugsweise in allen während des Betriebs der Sägeeinrichtung (1) möglichen Stellungen, näher an der kreisbogenabschnittsförmig ausgebildeten Führungseinrichtung (9) angeordnet ist als an der Schwenkachse (8).

9. Sägeeinrichtung (1) nach einem der Ansprüche 1 bis 8, **dadurch gekennzeichnet, dass** die Sägeeinrichtung (1) zumindest einen motorischen Schwenkantrieb (15), vorzugsweise in Form zumindest eines verschwenkbar gelagerten Linearantriebs, zum Verschwenken des Kreissägeblattspindelträgers (3) um die Schwenkachse (8) aufweist.

10. Sägeeinrichtung (1) nach einem der Ansprüche 1 bis 9, **dadurch gekennzeichnet, dass** die Sägeeinrichtung (1) eine, vorzugsweise reib- oder formschlüssig wirkende, Arretiereinrichtung (16) zur Arretierung des Kreissägeblattspindelträgers (3) in zumindest einer Stellung, vorzugsweise in voneinander verschiedenen Stellungen, des Kreissägeblattspindelträgers (3) aufweist.

11. Sägeeinrichtung (1) nach einem der Ansprüche 1 bis 10, **dadurch gekennzeichnet, dass** der Kreissägeblattspindelträger (3) ein, um die Schwenkachse (8) schwenkbar und die Kreissägeblattdrehachse (2) mit der Schwenkachse (8) verbindender Schwenkarm ist.

12. Sägeeinrichtung (1) nach einem der Ansprüche 1 bis 10, **dadurch gekennzeichnet, dass** der Kreissägeblattspindelträger (3) ein, an einem Schwenkachsenträger (17) entlang der kreisbogenabschnittsförmig ausgebildeten Führungseinrichtung (9), vorzugsweise entlang von zumindest zwei der kreisbogenabschnittsförmig ausgebildeten Führungseinrichtungen (9), bewegbarer Schlitten ist.

13. Sägeeinrichtung (1) nach einem der Ansprüche 1 bis 12, **dadurch gekennzeichnet, dass** die Schwenkachse (8) am und ortsfest in Relation zu dem bzw. einem Schwenkachsenträger (17) angeordnet ist.

14. Sägeeinrichtung (1) nach Anspruch 13, **dadurch gekennzeichnet, dass** der Schwenkachsenträger (17) ein entlang zumindest einer, vorzugsweise linearen, Transportbahn (18), vorzugsweise motorisch, verschiebbarer Sägewagen ist.

## Claims

1. A sawing device (1), in particular an underfloor circular saw for a panel-sizing installation, having at least one circular saw blade receiving spindle [4], rotatably mounted on a circular saw blade spindle support (3) about a circular saw blade rotational axis (2), to which a circular saw blade (5) is securable or secured and a circular saw blade drive motor (6) for rotation of the circular saw blade receiving spindle (4) about the circular saw blade rotational axis (2), wherein the circular saw blade spindle support (3) together with the circular saw blade receiving spindle (4) with its circular saw blade rotational axis (2) is pivotably mounted on a path (7), in the form of a portion of a circular arc, about a pivot axis (8), arranged at a distance from the circular saw blade rotational axis (2) and parallel to the circular saw blade rotational axis (2), of the sawing device (1), and the sawing device (1) has at least one guide device (9), in the form of a portion of a circular arc, by which the circular saw blade spindle support (3) is guided upon pivoting about the pivot axis (8), **characterized in that** the guide device (9) in the form of a portion of a circular arc is or has a guide rail and/or a guide groove.

2. A sawing device (1) according to claim 1, **characterized in that** the sawing device (1) has at least one cooling media nozzle (19) to apply cooling medium to a sawing surface (20), to be cooled, of the circular saw blade (5) secured to the circular saw blade receiving spindle (4).

3. A sawing device (1) according to claim 2, **characterized in that** the sawing device (1) has a distance control device, preferably in the form of at least one distance control cam or a distance control slotted link (21), which adjusts, preferably keeps at least substantially constant, the distance (30) between the cooling media nozzle (19) and the sawing surface (20), to be cooled, of the circular saw blade (5) in differing positions of the circular saw blade spindle support (3), preferably differing pivot positions of the circular saw blade spindle support (3) relative to the pivot axis (8).

4. A sawing device (1) according to any one of claims 1 to 3, **characterized in that** a circle centre (10) of the guide device (9) in the form of a portion of a circular arc lies on the pivot axis (8).

5. A sawing device (1) according to any one of claims 1 to 4, **characterized in that** a drive shaft (11), driven by the circular saw blade drive motor (6), of the circular saw blade drive motor (6) is rotatable about a drive shaft rotational axis (12) arranged coaxial with the pivot axis (8).

6. A sawing device (1) according to claim 5, **characterized in that** the drive shaft (11) of the circular saw blade drive motor (6) and the circular saw blade receiving spindle (4) are connected to one another by means of at least one drive belt (13), preferably tensionable by means of a tensioning device, or by means of at least one driving chain, preferably tensionable by means of a tensioning device, or by means of another power transmission, preferably a gear drive, for rotation of the circular saw blade receiving spindle (4).

7. A sawing device (1) according to any one of claims 1 to 6, **characterized in that** the distance between the pivot axis (8) and the circular saw blade rotational axis (2) is adjustable by means of a distance adjustment device (14).

8. A sawing device (1) according to any one of claims 1 to 7, **characterized in that** preferably in all positions possible during operation of the sawing device (1), the circular saw blade rotational axis (2) is arranged closer to the guide device (9), in the form of a portion of a circular arc, than to the pivot axis (8).

9. A sawing device (1) according to any one of claims 1 to 8, **characterized in that** the sawing device (1) has at least one motor-driven pivot drive (15), preferably in the form of at least one pivotably mounted linear drive, to pivot the circular saw blade spindle support (3) about the pivot axis (8).

10. A sawing device (1) according to any one of claims 1 to 9, **characterized in that** the sawing device (1) has a locking device (16), preferably acting in a friction-locked or form-locked manner, to lock the circular saw blade spindle support (3) in at least one position, preferably in differing positions, of the circular saw blade spindle support (3).

11. A sawing device (1) according to any one of claims 1 to 10, **characterized in that** the circular saw blade spindle support (3) is a pivot arm which is pivotable about the pivot axis (8) and connects the circular saw blade rotational axis (2) to the pivot axis (8).

12. A sawing device (1) according to any one of claims 1 to 10, **characterized in that** the circular saw blade spindle support (3) is a carriage movable along the guide device (9) in the form of a portion of a circular arc, preferably along at least two of the guide devices (9) in the form of a portion of a circular arc, on a pivot axis bearer (17).

13. A sawing device (1) according to any one of claims 1 to 12, **characterized in that** the pivot axis (8) is arranged at the pivot axis bearer (17) and in a fixed manner in relation to the or a pivot axis bearer (17).

14. A sawing device (1) according to claim 13, **characterized in that** the pivot axis bearer (17) is a saw carriage displaceable, preferably in a motor-driven manner, along at least one, preferably linear, transport path (18).

## Revendications

1. Dispositif de sciage (1), en particulier scie circulaire de table destinée à un système de découpe de panneaux, comportant au moins une broche de fixation (4) d'une lame circulaire positionnée sur un porte-broche (3) de lame circulaire pouvant tourner autour d'un axe de rotation (2) de la lame circulaire, broche sur laquelle une lame circulaire (5) peut être ou est fixée, et un moteur d'entraînement (6) de la lame circulaire destiné à faire tourner la broche de fixation (4) de la lame circulaire autour de l'axe de rotation (2) de la lame circulaire, le porte-broche (3) étant positionné, avec la broche de fixation (4) et l'axe de rotation (2) de la lame circulaire sur une trajectoire (7) en forme d'arc de cercle, de façon à pivoter autour d'un axe de pivotement (8) du dispositif de sciage (1) à distance de l'axe de rotation (2) de la lame circulaire et parallèlement à l'axe de rotation (2) de la lame circulaire, et le dispositif de sciage (1) présente au moins un dispositif de guidage (9) en forme d'arc de cercle qui guide le porte-broche (3) de lame circulaire lors du pivotement autour de l'axe de pivotement (8), **caractérisé en ce que** le dispositif de guidage (9) en forme d'arc de cercle est ou présente un rail de guidage et/ou une rainure de guidage.

2. Dispositif de sciage (1) selon la revendication 1, **caractérisé en ce qu'**il présente au moins une buse (19) à fluide de refroidissement afin d'appliquer du fluide de refroidissement sur une surface de sciage (20) à refroidir de la lame circulaire (5) fixée sur le porte-broche (4) de lame circulaire.

3. Dispositif de sciage (1) selon la revendication 2, **caractérisé en ce qu'**il présente un système de commande de la distance, de préférence sous la forme d'au moins une came de commande de la distance ou d'une coulisse de commande de la distance (21), lequel système règle la distance (30) entre la buse (19) à fluide de refroidissement et la surface de sciage (20) à refroidir de la lame circulaire (5) lorsque le porte-broche (3) de lame circulaire est dans des positions différentes l'une de l'autre, de préférence dans des positions de pivotement différentes l'une de l'autre du porte-broche (3) de la lame circulaire par rapport à l'axe de pivotement (8), du moins maintient de préférence cette distance essentiellement constante.

4. Dispositif de sciage (1) selon l'une quelconque des revendications 1 à 3, **caractérisé en ce qu'**un centre de cercle (10) du dispositif de guidage (9) en forme d'arc de cercle repose sur l'axe de pivotement (8).

5. Dispositif de sciage (1) selon l'une quelconque des revendications 1 à 4, **caractérisé en ce qu'**un arbre d'entraînement (11) du moteur d'entraînement (6) de la lame circulaire, entraîné par le moteur d'entraînement (6) de lame circulaire, peut tourner autour d'un axe de rotation (12) d'arbre d'entraînement disposé coaxialement à l'axe de pivotement (8).

6. Dispositif de sciage (1) selon la revendication 5, **caractérisé en ce que** l'arbre d'entraînement (11) du moteur d'entraînement (6) de la lame circulaire et la broche de fixation (4) de la lame circulaire sont reliés entre eux au moyen d'au moins une courroie d'entraînement (13), pouvant être tendue, de préférence, au moyen d'un dispositif de tension, ou au moyen d'au moins une chaîne d'entraînement pouvant être tendue, de préférence, au moyen d'un système de tension, ou au moyen d'un autre mécanisme, de préférence, un engrenage, destiné à faire tourner la broche de fixation (4) de la lame circulaire.

7. Dispositif de sciage (1) selon l'une quelconque des revendications 1 à 6, **caractérisé en ce que** la distance entre l'axe de pivotement (8) et l'axe de rotation (2) de la lame circulaire peut être ajustée au moyen d'un dispositif d'ajustage (14) de la distance.

8. Dispositif de sciage (1) selon l'une quelconque des revendication 1 à 7, **caractérisé en ce que** l'axe de rotation (2) de la lame circulaire, est disposé plus près du dispositif de guidage (9) en forme d'arc de cercle que de l'axe de pivotement (8), de préférence dans toutes les positions possibles pendant le fonctionnement du dispositif de sciage (1).

9. Dispositif de sciage (1) selon l'une quelconque des revendications 1 à 8, **caractérisé en ce que** le dispositif de sciage (1) présente au moins un entraînement pivotant (15) motorisé, de préférence sous la forme d'au moins un entraînement linéaire pouvant pivoter, afin de faire pivoter le porte-broche (3) de la lame circulaire autour de l'axe de pivotement (8).

10. Dispositif de sciage (1) selon l'une quelconque des revendications 1 à 9, **caractérisé en ce que** le dispositif de sciage (1) présente un dispositif d'arrêt (16), de préférence par frottement ou complémentarité de forme, pour arrêter le porte-broche (3) de la lame circulaire dans au moins une position, de préférence dans des positions différentes l'une de l'autre, du porte-broche (3).

11. Dispositif de sciage (1) selon l'une quelconque des revendications 1 à 10, **caractérisé en ce que** le porte-broche (3), est un bras pivotant pouvant pivoter autour de l'axe de pivotement (8) et reliant l'axe de rotation (2) de la lame circulaire à l'axe de pivotement (8).

12. Dispositif de sciage (1) selon l'une quelconque des revendications 1 à 10, **caractérisé en ce que** le porte-broche (3) de la lame circulaire est un chariot mobile sur un support d'axe de pivotement (17) le long du dispositif de guidage (9) en forme d'arc de cercle, de préférence le long d'au moins deux des dispositifs de guidage (9) en forme d'arc de cercle.

13. Dispositif de sciage (1) selon l'une quelconque des revendications 1 à 12, **caractérisé en ce que** l'axe de pivotement (8) est disposé sur le ou un support d'axe de pivotement (17) et de manière fixe en relation avec ce dernier.

14. Dispositif de sciage (1) selon la revendication 13, **caractérisé en ce que** le support d'axe de pivotement (17) est un chariot de sciage, de préférence motorisé, pouvant se déplacer le long d'au moins une trajectoire de transport (18) de préférence linéaire.
